# EUROPEAN PATENT APPLICATION

(11) **EP 4 776 114 A1**
(43) Date of publication of application: **15.07.2026**
(21) Application number: 26150780.0
(22) Date of filing: 08.01.2026
(51) Int. Cl.: G06F 3/12, G06K 15/00, H04N 1/44

(54) **THERMAL PRINTER, THERMAL PRINTER SYSTEM, AND AUTHENTICATION METHOD**

(30) Priority: 09.01.2025 JP 2025003224
(71) Applicant: ETRIA Co., Ltd., Yokohama, Kanagawa 220-0011 (JP)
(72) Inventor: SHIMODA, Koichi, Yokohama, 220-0011 (JP)
(74) Representative: J A Kemp LLP

(57) **Abstract**

A thermal printer includes a print head, a transmitter, a receiver, and a controller. The print head is configured to print an image on a recording medium by applying heat. The transmitter is configured to transmit an authentication request including authentication information about a user to an external image forming apparatus. The receiver is configured to receive an authentication result response including an authentication result for the user using the authentication information from the image forming apparatus. The controller is configured to control the print head, based on the authentication result included in the received authentication result response.

## Description

### BACKGROUND

### Technical Field

The present disclosure relates to a thermal printer, a thermal printer system, and an authentication method.

### Related Art

A user authentication function is provided for each of devices of a multi-function peripheral (MFP) or a thermal printer (for example, a label printer, a barcode printer), and each device performs authentication processing according to authentication settings such as internal authentication, external authentication, and cloud authentication. In addition, there are various user authentication functions such as internal authentication, external authentication, and cloud authentication, and various server settings and user registration are also required, and there are devices that do not have a user authentication function.

### BRIEF DESCRIPTION OF THE DRAWINGS

FIG. 1 is a diagram illustrating an example of a configuration of a thermal printer system according to the present embodiment;
FIG. 2 is an external perspective view of a thermal printer according to the present embodiment;
FIG. 3 is a diagram illustrating an example of a hardware configuration of the thermal printer according to the present embodiment;
FIG. 4 is a diagram illustrating an example of a functional configuration of the thermal printer system according to the present embodiment; and
FIG. 5 is an example of an authentication screen displayed by the thermal printer according to the present embodiment.

### DETAILED DESCRIPTION

A thermal printer according to an embodiment includes a print head, a transmitter, a receiver, and a controller. The print head is configured to print an image on a recording medium by applying heat. The transmitter is configured to transmit an authentication request including authentication information about a user to an external image forming apparatus. The receiver is configured to receive an authentication result response including an authentication result for the user using the authentication information from the image forming apparatus. The controller is configured to control the print head, based on the authentication result included in the received authentication result response.

An embodiment may provide a thermal printer and a thermal printer system that can achieve various user authentication even if the thermal printer system does not have an authentication function.

Hereinafter, an example of a thermal printer and a thermal printer system according to the present embodiment will be described with reference to the accompanying drawings.

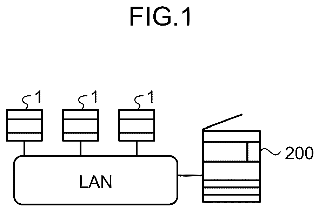

FIG. 1 is a diagram illustrating an example of a configuration of the thermal printer system according to the present embodiment. As illustrated in FIG. 1, the thermal printer system according to the present embodiment includes a plurality of thermal printers 1 (for example, a barcode printer, a label printer) and an MFP 200 (an example of an image forming apparatus). The plurality of thermal printers 1 and the MFP 200 are communicably connected to each other via a network such as a local area network (LAN).

That is, in the thermal printer system, the MFP 200 and the plurality of thermal printers 1 are disposed on the same network. In addition, it is assumed that the MFP 200 that cooperates is registered in advance in the thermal printer 1 (hereinafter, referred to as MFP cooperation setting).

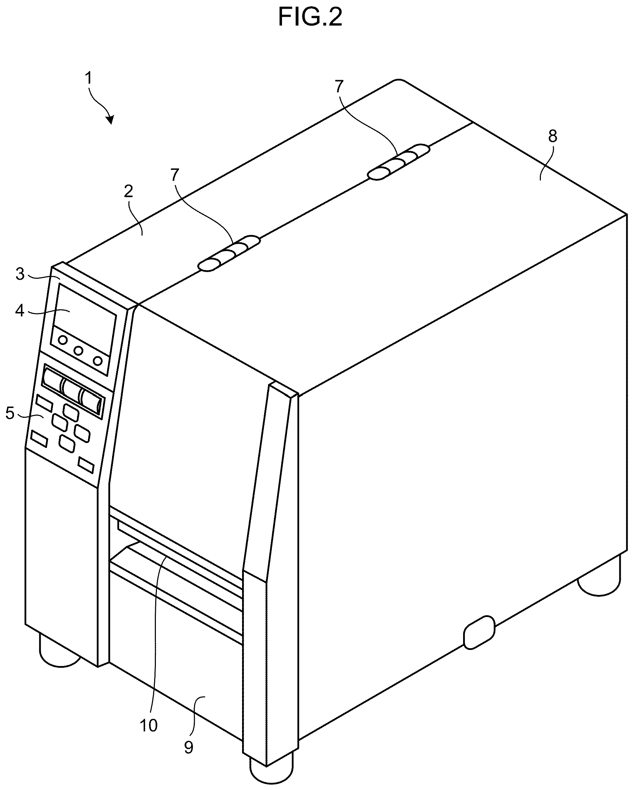

FIG. 2 is an external perspective view of the thermal printer according to the present embodiment. The thermal printer 1 according to the present embodiment is a thermal printer that prints and issues information onto a label. As illustrated in FIG. 2, the thermal printer 1 includes a case 2 on the left side, and a case 8 connected to the right side of the case 2 by a hinge 7. A front panel 3 formed on the front surface of the case 2 includes a display unit (display) 4 and an operation unit 5. The display unit 4 includes a liquid crystal display with a backlight, but another type of display device may be used.

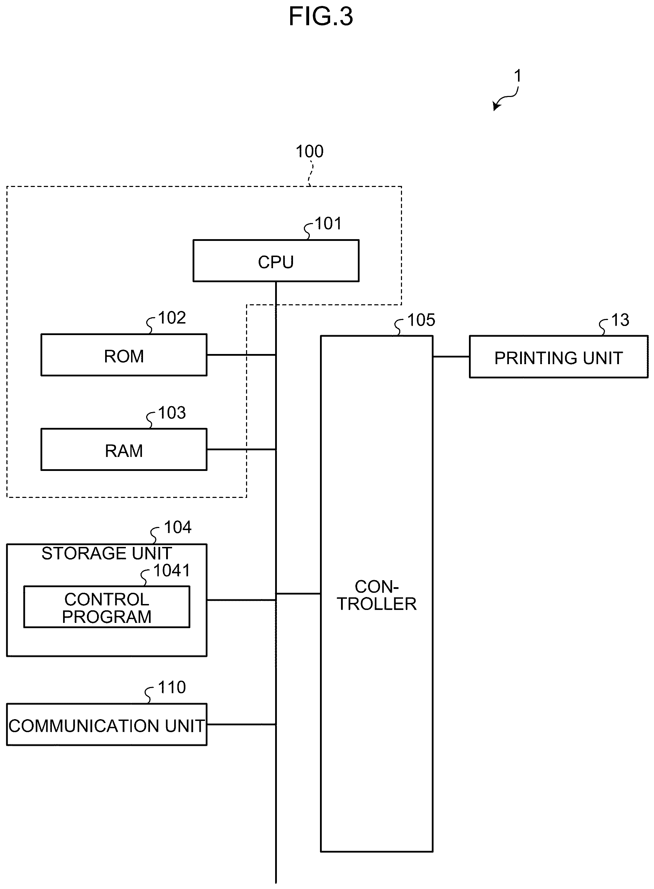

The case 8 on the right side has a structure in which the inside of a housing (that is, the cases 2 and 8) can be largely open from the side surface side by an upward rotation with the hinge 7 as the center. The thermal printer 1 includes, inside the housing, a roll paper (label paper) P in which a plurality of labels is attached to a mount and that is wound in a roll shape, and a printing unit (print head) 13 (see FIG. 3) that performs printing on a label (not illustrated) drawn out from the roll paper (label paper) P. A front panel 9 provided on the front surface of the case 8 is provided with a label issuing port 10. The thermal printer 1 issues the label after printing from the label issuing port 10.

Next, a hardware configuration of the thermal printer 1 will be described with reference to FIG. 3. FIG. 3 is a diagram illustrating an example of the hardware configuration of the thermal printer according to the present embodiment.

As illustrated in FIG. 3, the thermal printer 1 includes a central processing unit (CPU) 101, a read only memory (ROM) 102, and a random access memory (RAM) 103.

The CPU 101 is an example of a processor, and serves as a control body of the thermal printer 1. The ROM 102 stores various programs. The RAM 103 deploys the programs and various data. The CPU 101, the ROM 102, and the RAM 103 are connected to each other via a bus or the like. The CPU 101, the ROM 102, and the RAM 103 constitute a control unit (controller) 100. That is, the control unit 100 executes various types of control processing related to operation of the thermal printer 1 by the CPU 101 operating according to a control program 1041 stored in the ROM 102 or a storage unit 104 described later and deployed in the RAM 103.

The storage unit 104 includes a non-volatile memory such as a hard disc drive (HDD), a flash memory, or a solid state drive (SSD) that retains stored information even when the power is turned off. The storage unit 104 stores the control program 1041 for controlling the operation of the thermal printer 1. In addition, the storage unit 104 stores various types of setting information related to the operation of the thermal printer 1.

Furthermore, the control unit 100 is connected to a controller 105 that controls input and output of the data via the bus or the like. The printing unit 13 and the like are connected to the controller 105. The printing unit 13 is an example of a printing unit that prints an image on a recording medium (for example, a label) by applying heat. For example, the printing unit 13 may print an image on a recording medium according to a print job such as a barcode stored in the thermal printer 1, or may print an image on a recording medium according to a print job received from the MFP 200.

The controller 105 outputs detection results by the various sensors to the control unit 100. In addition, the controller 105 receives an instruction from the control unit 100 and controls operation of each unit of the thermal printer 1. For example, the controller 105 receives an instruction from the control unit 100 and controls operation of the printing unit 13.

Furthermore, the control unit 100 is connected to a communication unit 110 via the bus or the like. The communication unit 110 communicates with an external apparatus such as an information processing apparatus via a communication line (not illustrated). For example, the communication unit 110 acquires printing data to be printed on a label from the external apparatus or acquires a printing instruction. The communication line may be a wired communication line or a wireless communication line.

Note that the hardware configuration of the thermal printer 1 is not limited to the configuration in FIG. 3. For example, the thermal printer 1 may include the operation unit 5 for accepting an operation from a user, the display unit 4 for displaying various types of information, and the like. In addition, various sensors (not illustrated) and the like are connected to the controller 105.

In the thermal printer 1 having the above-described configuration, the control unit 100 controls the operation of each unit of the thermal printer 1 in cooperation with the control program 1041, and performs printing of characters, barcodes, and the like on the label paper P, for example.

Specifically, the control unit 100 generates, from data representing a character string or a pattern to be printed such as a barcode, a printing job in which the data is configured as data in units of dots. In addition, the control unit 100 generates line printing data by dividing the generated printing job in units of one line to be printed by heating elements of the printing unit 13. In the line printing data, a portion to be printed is represented as a dot pattern. For example, in a case where the printing resolution is 360 dpi, line printing data divided into 360 lines per inch is generated.

The control unit 100 performs printing for one line by controlling on/off, energization time, and the like of each heating element of the printing unit on the basis of the dot pattern of the line printing data. In addition, the control unit 100 sequentially performs printing for each line in accordance with a conveyance speed of the label paper P to form a barcode or the like to be printed on the label of the label paper P.

Furthermore, in a case where there is a non-printing area where printing is not performed in a plurality of pieces of line printing data generated for respective lines, the control unit 100 executes control for suppressing consumption of an ink ribbon IR (hereinafter, also referred to as a ribbon save operation). Here, the non-printing area means an area where line printing data in which there is no dot pattern to be printed is continuous in a series of line printing data constituting the printing data.

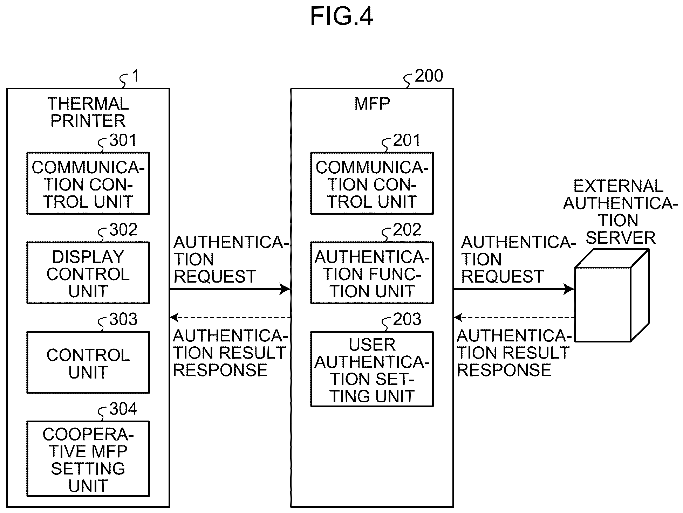

FIG. 4 is a diagram illustrating an example of a functional configuration of the thermal printer system according to the present embodiment. In the present embodiment, the thermal printer 1 implements a communication control unit 301, a display control unit (display controller) 302, a control unit 303, a cooperative MFP setting unit 304, and the like as illustrated in FIG. 4 by the CPU 101 operating according to the control program 1041 stored in the ROM 102 or the storage unit 104 and deployed in the RAM 103.

The display control unit 302 displays various types of information such as an authentication screen on the display unit 4 included in the thermal printer 1. Here, the authentication screen is a screen for inputting authentication information (user credential information, for example, an ID, a password, a PIN, or the like) about the user.

The cooperative MFP setting unit 304 performs setting (hereinafter, referred to as MFP cooperation setting) of the MFP 200 cooperating with the thermal printer 1.

The communication control unit 301 is an example of a transmitting unit (transmitter) that transmits an authentication request to the MFP 200. Here, the authentication request is information including the authentication information about the user.

In addition, the communication control unit 301 is an example of a receiving unit (receiver) that receives an authentication result response from the MFP 200. This makes it possible to implement various types of user authentication even by the thermal printer 1 having no user authentication function. Here, the authentication result response is information including an authentication result for the user using the authentication information. For example, the communication control unit 301 may receive the authentication result response including the authentication result for the user using the authentication information by an external authentication server from the MFP 200.

Furthermore, in a case where authentication of the user in the MFP 200 is successful, the communication control unit 301 may receive a print job from the MFP 200. In this case, the printing unit 13 prints an image on the recording medium according to the print job received from the MFP 200.

The control unit 303 is an example of a control unit that controls the printing unit 13 on the basis of the authentication result included in the authentication result response received by the communication control unit 301.

In addition, the control unit 303 requests the MFP 200 to manage a counter of the thermal printer 1, manage a quota in a drive shared by the plurality of thermal printers 1, manage the number of recording media that can be printed by the user of the thermal printer 1, manage a log related to printing in the thermal printer 1, and the like according to the authentication result for the user.

Furthermore, the control unit 303 may determine a function available to the user among functions of the printing unit 13 on the basis of the authentication result included in the authentication result response. For example, the control unit 303 may determine an image (for example, a two-dimensional barcode, a label, a logo) that can be printed by the printing unit 13 on the basis of the authentication result for the user. Alternatively, for example, the control unit 303 may determine a display item and a design of a ruled line to be included in a label to be printed by the printing unit 13, a line to be included in the two-dimensional barcode (for example, only a vertical line), a density of an image to be printed by the printing unit 13, whether or not a complicated image can be printed by the printing unit 13, and the like on the basis of the authentication result for the user.

In the present embodiment, the MFP 200 includes a communication control unit 201, an authentication function unit 202, and a user authentication setting unit (user authentication setter) 203 as illustrated in FIG. 4 by the CPU operating according to various programs stored in the ROM or the like and deployed in the RAM.

The communication control unit 201 is an example of a receiving unit that receives an authentication request from the thermal printer 1. In addition, the communication control unit 201 is an example of a transmitting unit that transmits an authentication result response to the thermal printer 1. Furthermore, in a case where authentication of the user of the thermal printer 1 is successful, the communication control unit 201 may select the thermal printer 1 to which the print job is to be transmitted from among the plurality of thermal printers 1 connected to the MFP 200 and transmit the print job to the selected thermal printer 1.

The user authentication setting unit 203 performs setting regarding authentication of the thermal printer 1 (hereinafter, referred to as user authentication setting). Here, for example, the user authentication setting may be a setting indicating whether authentication processing for the user of the thermal printer 1 is performed by internal authentication or external authentication.

The authentication function unit 202 is an example of an authentication processor (authentication processor) that performs authentication processing for the user using the authentication information included in the authentication request received by the communication control unit 201. In the present embodiment, the authentication function unit 202 executes internal authentication or external authentication of the user according to the user authentication setting set by the user authentication setting unit 203.

For example, the authentication function unit 202 may perform internal authentication using the authentication information included in the authentication request. Alternatively, for example, the authentication function unit 202 may transmit an authentication request to an external authentication server and receive an authentication result request including an authentication result for the user in the external authentication server.

In addition, in a case where the authentication information about the user is added to a print job input from the outside, the authentication function unit 202 may perform the authentication processing for the user using the authentication information added to the print job.

Here, a description will be given of an example of a flow of authentication processing for the user of the thermal printer 1 in the thermal printer system according to the present embodiment. In a case where the user activates the thermal printer 1 and the MFP cooperation setting is set, the display control unit 302 displays an authentication screen. The authentication screen is provided with an entry for inputting an ID, a password, and a PIN of the user. The communication control unit 301 transmits authentication information (user credential information) input on the authentication screen to the cooperating MFP 200 as an authentication request.

In the MFP 200, when the authentication request is received from the thermal printer 1, the authentication function unit 202 performs authentication processing according to the user authentication setting (internal authentication, external authentication, or the like) of the MFP 200 using the user credential information sent together with the authentication request. The communication control unit 201 returns an authentication result of the authentication processing to the thermal printer 1 that is the request source. The thermal printer 1 determines whether the authentication is successful or unsuccessful on the basis of the authentication result returned from the MFP 200.

With such a configuration, even in the thermal printer 1 having no user authentication function, the user authentication can be implemented using a user authentication function of the MFP 200 from the outside in cooperation with the MFP 200.

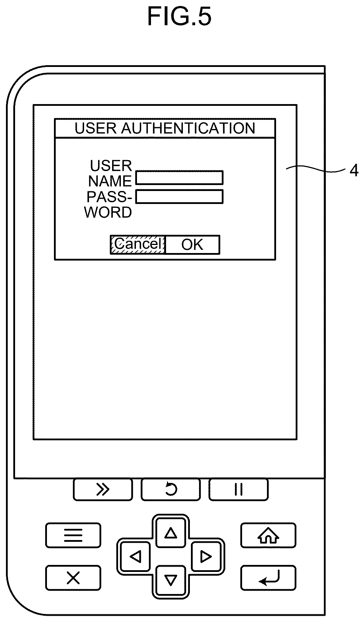

FIG. 5 is an example of the authentication screen displayed by the thermal printer according to the present embodiment. In the present embodiment, as illustrated in FIG. 5, the display control unit 302 displays, on the display unit 4, the authentication screen on which a user name and a password, which are examples of the ID of the user of the thermal printer 1, can be input.

As described above, according to the thermal printer system of the present embodiment, an authentication request is transmitted together with authentication information to the MFP 200 present on the same network from the thermal printer 1, authentication processing is performed according to the request in the MFP 200, and an authentication result of the authentication processing is returned to the thermal printer 1, so that various types of user authentication can be implemented even in the thermal printer 1 having no user authentication function.

Any of the above-described apparatus, devices or units can be implemented as a hardware apparatus, such as a special-purpose circuit or device, or as a hardware/software combination, such as a processor executing a software program.

Further, as described above, any one of the above-described and other methods may be embodied in the form of a computer program stored in any kind of storage medium. Examples of storage mediums include, but are not limited to, flexible disk, hard disk, optical discs, magnetooptical discs, magnetic tapes, nonvolatile memory, semiconductor memory, read-only-memory (ROM), etc.

Each of the functions of the described embodiments, and any one of the above-described and other methods may be implemented by one or more processing circuits or circuitry. Processing circuitry includes a programmed processor, as a processor includes circuitry. A processing circuit includes devices such as an application specific integrated circuit (ASIC), digital signal processor (DSP), field programmable gate array (FPGA) and conventional circuit components arranged to perform the recited functions.

As used herein, the singular forms "a", "an" and "the" are intended to include the plural forms as well, unless the context clearly indicates otherwise.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A thermal printer comprising:
a print head configured to print an image on a recording medium by applying heat;
a transmitter configured to transmit an authentication request including authentication information about a user to an external image forming apparatus;
a receiver configured to receive an authentication result response including an authentication result for the user using the authentication information from the image forming apparatus; and
a controller configured to control the print head, based on the authentication result included in the received authentication result response.

2. The thermal printer according to claim 1, further comprising:
a display; and
a display controller configured to display, on the display, an authentication screen on which the authentication information is inputtable, wherein
the transmitter is configured to transmit the authentication request including the authentication information input on the authentication screen to the image forming apparatus.

3. The thermal printer according to claim 1 or 2, wherein the receiver is configured to receive the authentication result response including the authentication result for the user using the authentication information by an external authentication server from the image forming apparatus.

4. The thermal printer according to any one of claims 1 to 3, wherein the controller is configured to determine a function available to the user from among functions of the print head, based on the authentication result.

5. The thermal printer according to any one of claims 1 to 4, wherein
the receiver is configured to receive a print job from the image forming apparatus in a case where the authentication of the user is successful, and
the print head is configured to perform printing on the recording medium according to the print job received from the image forming apparatus.

6. The thermal printer according to any one of claims 1 to 5, wherein the controller is configured to request the image forming apparatus to manage a counter of the thermal printer, manage a quota in a drive shared by a plurality of thermal printers, manage a number of recording media that is printable by the user of the thermal printer, and manage a log related to printing in the thermal printer according to the authentication result.

7. The thermal printer according to claim 4, wherein the controller is configured to:
determine an image that is printable by the print head based on the authentication result; or
determine, based on the authentication result, at least one of a display item and a design of a ruled line to be included in the recording medium printed by the print head, a line to be included in a two-dimensional barcode, a density of an image to be printed by the print head, and whether or not a complicated image is printable by the print head.

8. A thermal printer system comprising:
a thermal printer; and
an image forming apparatus, wherein
the thermal printer includes:
a print head configure to print an image on a recording medium by applying heat;
a first transmitter configured to transmit an authentication request including authentication information about a user to an external image forming apparatus;
a first receiver configured to receive an authentication result response including an authentication result for the user using the authentication information from the image forming apparatus; and
a controller configured to control the print head, based on the authentication result included in the received authentication result response, and
the image forming apparatus includes:
a second receiver configured to receive the authentication request from the thermal printer;
an authentication processor configured to perform authentication processing for the user using the authentication information included in the authentication request; and
a second transmitter that transmits the authentication result response to the thermal printer.

9. The thermal printer system according to claim 8, wherein the thermal printer includes:
a display; and
a display controller configured to display, on the display, an authentication screen on which the authentication information is inputtable, wherein
the first transmitter is configured to transmit the authentication request including the authentication information input on the authentication screen to the image forming apparatus.

10. The thermal printer system according to claim 8 or 9, wherein the first receiver is configured to receive the authentication result response including the authentication result for the user using the authentication information by an external authentication server from the image forming apparatus.

11. The thermal printer system according to any one of claims 8 to 10, wherein the controller is configured to determine a function available to the user from among functions of the print head, based on the authentication result.

12. The thermal printer system according to any one of claims 8 to 11, wherein
the first receiver is configured to receive a print job from the image forming apparatus in a case where the authentication of the user is successful, and
the print head is configured to perform printing on the recording medium according to the print job received from the image forming apparatus.

13. The thermal printer system according to claim 9, wherein the controller is configured to request the image forming apparatus to manage a counter of the thermal printer, manage a quota in a drive shared by a plurality of thermal printers, manage a number of recording media that is printable by the user of the thermal printer, and manage a log related to printing in the thermal printer according to the authentication result.

14. The thermal printer system according to claim 11, wherein the controller is configured to:
determine an image that is printable by the print head based on the authentication result; or
determine, based on the authentication result, at least one of a display item and a design of a ruled line to be included in the recording medium printed by the print head, a line to be included in a two-dimensional barcode, a density of an image to be printed by the print head, and whether or not a complicated image is printable by the print head.

15. An authentication method performed by a thermal printer including a print head configured to print an image on a recording medium by applying heat, the authentication method comprising:
transmitting an authentication request including authentication information about a user to an external image forming apparatus;
receiving an authentication result response including an authentication result for the user using the authentication information from the image forming apparatus; and
controlling the print head, based on the authentication result included in the received authentication result response.
